# FASCICULE DE BREVET EUROPEEN

(11) **EP 0 470 015 B1**
(45) Date de publication et mention de la délivrance du brevet: **17.05.1995**
(21) Numéro de dépôt: 91420272.6
(22) Date de dépôt: 23.07.1991
(51) Int. Cl.: B01D 65/02, B01D 61/14

(54) **Procédé de décolmatage en microfiltration tangentielle**
Verfahren zur Reinigung in Querstrom-Mikrofiltration
Process for cleaning in crossflow microfiltration

(30) Priorité: 30.07.1990 FR 9009927
(43) Date de publication de la demande: 05.02.1992
(73) Titulaire: LE CARBONE LORRAINE, 92400 Courbevoie (FR)
(72) Inventeur: Hlavacek, Marc, P.O.Box 1, Kensington 2033, NSW (AU); Dodds, John, F-54000 Nancy (FR); Bauer, Jean-Michel, F-54530 Pagny sur Moselle (FR)
(74) Mandataire: Mougeot, Jean-Claude

(56) Documents cités:
- EP-A- 0 079 040
- FR-A- 2 265 437
- FR-A- 2 473 313
- FR-A- 2 586 202
- JP-A- 6 443 305
- PATENT ABSTRACTS OF JAPAN vol. 13, no. 233 (C-601)(3581) 29 Mai 1989 & JP-A-1 43 305 (FUJI PHOTO FILM CO LTD )
- PATENT ABSTRACTS OF JAPAN vol. 10, no. 156 (C-351)(2212) 5 Juin 1986 & JP-A-61 11 108 (NITTO DENKI )
- PATENT ABSTRACTS OF JAPAN vol. 7, no. 285 (C-201)(1430) 20 Décembre 1983 & JP-A-58 163 406 (NITTO DENKI )
- PATENT ABSTRACTS OF JAPAN vol. 12, no. 353 (C-530)(3200) 21 Septembre 1988 & JP-A-63 111 995 (DAICEL CHEM )

## Description

### DOMAINE DE L'INVENTION

L'invention concerne un procédé de décolmatage en microfiltration tangentielle, applicables plus particulièrement à la filtration de liquides corrosifs.

### RAPPEL DE L'ART ANTERIEUR

On connaît de nombreux documents évoquant les problèmes liés à la filtration, notamment le colmatage des membranes filtrantes, et proposant des procédés de décolmatage.

Ainsi, le brevet français No 2586202 décrit un dispositif et un procédé de décolmatage en filtration tangentielle qui prévoit des moyens pour inverser périodiquement et automatiquement la pression au niveau de la membrane (pression transmembranaire) de manière à ce que du filtrat traverse la membrane en sens inverse et décolmate la membrane.

De même, le brevet français No 2265437 décrit une installation d'ultrafiltration qui comporte des moyens pour réaliser un lavage en retour automatique et périodique, c'est à dire pour faire passer un liquide à travers la membrane en sens inverse du sens de passage du filtrat.

D'une manière assez générale, le décolmatage est réalisé en faisant passer, par inversion des pressions, du liquide filtré ou un autre liquide de lavage en sens inverse au travers de la membrane ultra-filtrante.

Le document EP-A-0 079 040 décrit un procédé de décolmatage comprenant
1) une réduction périodique de la pression transmembranaire
2) et/ou un accroissement de la vitesse de circulation du liquide à filtrer.

La réduction de la pression transmembranaire peut être obtenue :
a) soit par diminution de la pression nette positive, par ouverture d'une vanne en aval du filtre
b) et/ou par diminution de la pression différentielle, par fermeture d'une vanne placée sur la sortie du filtrat.

### POSITION DU PROBLEME ET OBJET DE L'INVENTION

Ayant à filtrer des fluides corrosifs, la demanderesse a rencontré des difficultés en transposant les procédés de décolmatage connus à la filtration tangentielle de fluides corrosifs, difficultés liées en particulier à des problèmes de corrosion.
En théorie, les procédés de décolmatage qui fonctionnent avec des liquides non-corrosifs devraient aussi fonctionner avec des liquides corrosifs; en pratique la demanderesse a constaté qu'il était difficile et/ou coûteux de transposer les procédés d'un cas à l'autre à cause de la corrosion des pompes, clapets anti-retour, vannes, réservoirs, circuits et équipements divers utilisés, qui n'ont pas toujours une tenue suffisante à la corrosion et qui, lorsqu'ils l'ont, sont de ce fait fort coûteux.
La demanderesse a donc recherché un procédé de décolmatage résolvant ce problème.

Un premier objet de l'invention est un procédé de filtration tangentielle avec décolmatage fonctionnant en milieu corrosif sans équipements supplémentaires spécifiques pour le décolmatage, de manière à limiter le coût de l'installation et celui de renouvellement des équipements par corrosion.

En outre, la demanderesse a observé que dans les procédés de l'art antérieur comportant une inversion de pression transmembranaire, celle-ci, surtout si elle est répétée fréquement, constitue une sollicitation mécanique de la membrane, ce qui n'est pas favorable à sa longévité et peut même entraîner une décohésion de la membrane et de son support.

Un deuxième objet de l'invention est donc un procédé de décolmatage sans inversion de la pression transmembranaire de manière à ménager la membrane et augmenter sa durée de vie.

L'art antérieur utilise généralement un décolmatage avec lavage en retour. Le lavage en retour, ou backflush, consiste, en phase de décolmatage, à faire passer du filtrat ou une solution de lavage sur une membrane en sens inverse du sens de passage du filtrat en phase de filtration, de sorte que, selon les procédés, des quantités de fluides plus ou moins importantes traversent la membrane en sens inverse du sens de filtration.
Un troisième objet de l'invention est un procédé de filtration avec décolmatage qui ne fait pas appel au lavage en retour. En effet, quoique généralement efficace et très largement utilisé, le lavage en retour nécessite souvent des équipements particuliers coûteux pour inverser la pression au niveau de la membrane, et surtout soit il renvoie dans le circuit amont (circuit du liquide à filtrer) du filtrat du circuit aval, ce qui n'est pas favorable à la productivité, soit il renvoie dans le circuit amont un liquide de lavage différent du filtrat, cas encore plus défavorable que le précédent sur le plan de la productivité puisque cela prend du temps de faire la substitution "filtrat--> liquide de lavage --> filtrat", sans compter avec les problèmes de purge et de mélanges entre fluides.

La demanderesse a donc recherché une méthode de filtration tangentielle répondant à ces trois objectifs.

### DESCRIPTION DE L'INVENTION

Selon l'invention, le procédé de filtration tangentielle avec décolmatage dans lequel un liquide à filtrer forme une boucle liquide et circule tangentiellement à une face d'une membrane (3) à l'aide d'une pompe (4) située en amont de la membrane qui crée une pression hydrodynamique Ph au niveau de la membrane, dans lequel un filtrat s'écoule sur l'autre face de la membrane par un conduit, muni d'une vanne (1) et d'un débitmètre (5), jusqu'à un bac à la pression atmosphérique Pa, dans lequel la filtration se produit grâce à une pression transmembranaire (Ph - Pa) positive, et selon lequel
- en phase de filtration, on ajuste la pression hydrodynamique Ph à l'aide d'une vanne réglable (2) située sur la boucle liquide en aval de la membrane,
- en phase de décolmatage,
   a) dans une premiére étape, on ferme la vanne (1) de manière à annuler le flux et la pression transmembranaire, et simultanément, on ouvre légèrement la vanne (2) de manière à maintenir constante la pression hydrodynamique Ph,
   b) puis, dans une deuxième étape, on ouvre brusquement la vanne (2), de manière à faire chuter brusquement la pression hydrodynamique Ph,
   c) finalement, on ouvre la vanne (1) et progressivement on ferme la vanne (2) de manière à retrouver la pression hydrodynamique et la pression transmembranaire élevées initiales, au de départ de la phase de filtration.

Selon un mode préféré de l'invention, la pression en aval de la vanne (2) est sensiblement égale à la pression atmosphérique, aux pertes de charge près.

La valeur de la pression hydrodynamique Ph dépend des membranes et n'est pas spécifique de l'invention. Elle est comprise en général entre 0,1 et 1 MPa.

Selon un mode préféré de l'invention, les vannes (1) et (2) sont des électro-vannes réglables. Ces deux électro-vannes sont de préférence asservies et temporisées : lorsque le débit de filtrat diminue et atteint une valeur de consigne Dc, un dispositif de commande (7) déclenche l'enchaînement des trois étapes constituant la phase de décolmatage :
a)- fermeture de l'électro-vanne (1) avec asservissement de l'électro-vanne (2) à la pression hydrodynamique Ph qui est maintenue constante (l'électro-vanne (2) s'ouvre pour compenser l'accroissement de flux tangentiel). La durée de cette étape n'est pas critique, elle est généralement comprise entre 1 et 10 secondes.
b)- ouverture brusque de l'électro-vanne (2) en un temps le plus bref possible, en pratique généralement compris entre 1/10ème de seconde et 1 seconde. La pression Ph chute à un niveau qui est sensiblement celui de la pression atmosphérique, aux pertes de charge près dues aux tuyauteries. Simultanément à l'ouverture de l'électro-vanne (2), on peut ouvrir l'électro-vanne (10) pour recueillir du rétentat riche en boues de colmatage.
   La durée totale de cette étape variera en général de quelques secondes à quelques dizaines de secondes pour les suspensions les plus colmatantes.
c)- ouverture de l'électro-vanne (1) et fermeture progressive de l'électro-vanne (2) en une vingtaine de secondes.
   Globalement, la phase de décolmatage dure moins d'une minute.

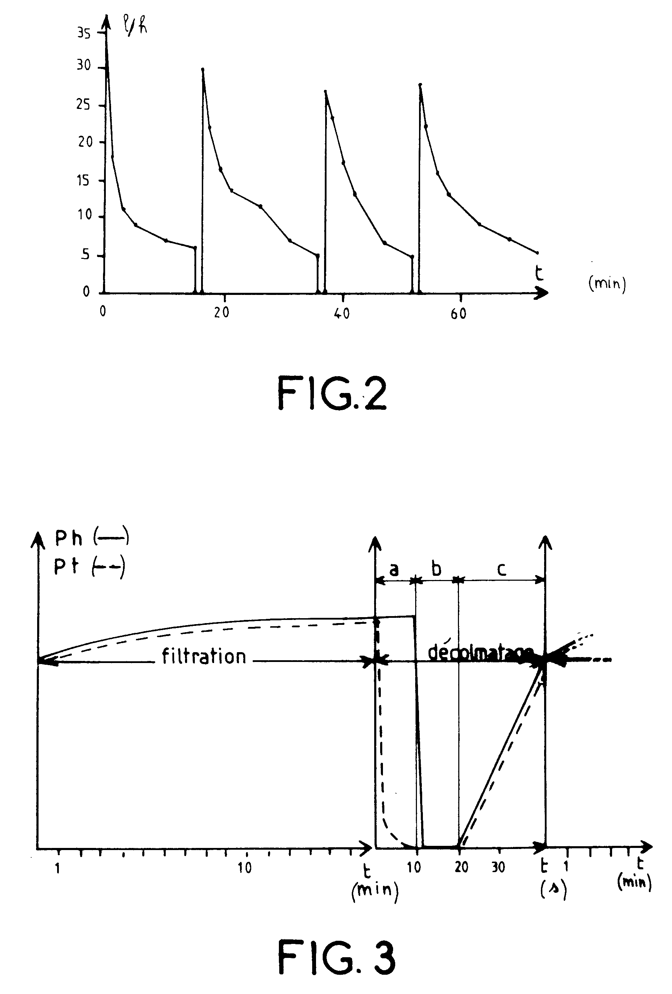

L'invention réside essentiellement dans ce mode particulier de décolmatage combinant une brusque chute de pression Ph à un flux et une pression transmembranaires sensiblement nulles, sans augmenter la pression hydrodynamique.
L'invention sera mieux comprise en considérant la figure 3 sur laquelle figurent la pression hydrodynamique Ph et la pression transmembranaire Pt durant un cycle complet de filtration et de décolmatage (Ph est en trait plein, Pt en pointillés) :
Il convient de noter que Ph est une pression relative de sorte que, lorsque la vanne (1) est ouverte, que ce soit durant la filtration ou l'étape c) du décolmatage, on a sensiblement la relation Ph = Pt. Par contre, dès que la vanne (1) est fermée, Pt devient nul, les pressions s'équilibrant de part et d'autre de la membrane sans qu'il y ait de flux transmembranaire significatif, les liquides étant peu compressibles. Le décolmatage physique, qui a lieu essentiellement pendant l'étape b) du décolmatage, a donc bien lieu à pression et flux transmembranaire nuls. A l'étape c), on revient aux pressions de début du cycle de filtration en ouvrant la vanne (1) et en fermant progressivement la vanne (2).

On a observé que si, à l'étape a) du décolmatage, la vanne (1) était fermée en premier avant que la vanne (2) soit davantage ouverte, la pression hydrodynamique tendait à augmenter et on a constaté que cela n'était pas favorable au décolmatage, sans doute à cause d'un plus grand compactage du gâteau de filtration.
De même, si on ouvrait la vanne (2) avant que la vanne (1) soit fermée, la pression hydrodynamique Ph chute et on a constaté que cela également ne permettait pas le décolmatage.
On a aussi observé que l'efficacité du décolmatage était lié à la vitesse d'ouverture de la vanne (2) à l'étape b). C'est à cette étape que la membrane se décolmate. Une hypothèse émise par la demanderesse est que le décolmatage est peut-être provoqué par la propagation de la perturbation due à la brusque variation de pression Ph (au moins égale à 0,05MPa/s et de préférence supérieure à 0,1 MPa/s), plutôt que par l'accroissement du flux et de la vitesse tangentielle résultant de la fermeture de la vanne (1).

Enfin, il est également important que la vanne (2) soit fermée progressivement à l'étape c) sous peine de recolmater rapidement la membrane, la vitesse de montée en pression devant être inférieure à 0,1 MPa/s et de préférence inférieure à 0,01 MPa/s.

Durant l'étape b), il est possible d'ouvrir la vanne (10) afin de récupérer du rétentat chargé des particules solides de colmatage, et de limiter l'enrichissement de la suspension à filtrer en particules solides. La vanne (10) peut être fermée avant la fin de l'étape c).

Le décolmatage selon l'invention nécessite donc que soient respectées différentes conditions relatives à des vitesses d'ouverture/de fermeture, à un ordonnancement d'actions successives/simultanées, de sorte que, bien le décolmatage selon l'invention puisse être réalisé manuellement et avec des vannes ordinaires, il est néanmoins souhaitable de mettre en oeuvre l'invention à l'aide d'électro-vannnes et de dispositifs de commande automatiques, dont on peut fixer les différents paramètres, par exemple par programmation. Ces dispositifs reçoivent des informations (niveau du débit (5), pression hydrodynamique Ph en sortie de membrane mesurée par le manomètre (8) sont les informations minimum dont a besoin le dispositif (7)) et exécutent des ordres (ouverture/fermeture contrôlée de vannes 1, 2 et 10).

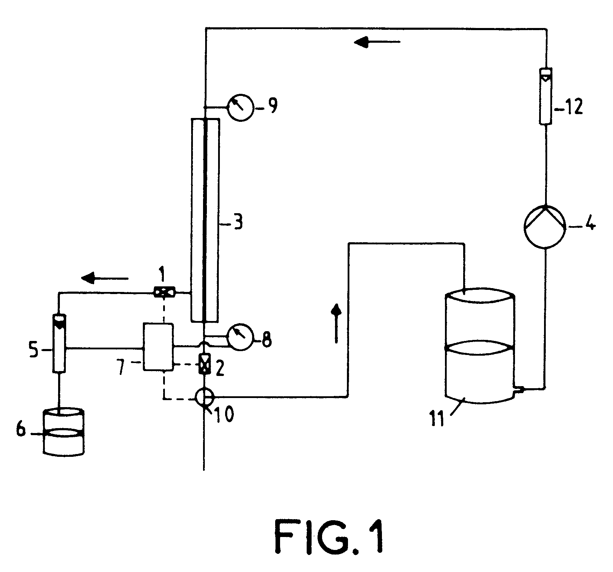

L'exemple qui suit et les figures 1, 2, 3 associées permettra d'illustrer et de mieux comprendre le procédé de l'invention :
Le dispositif pour mettre en oeuvre le procédé de l'invention, schématisé à la figure 1, et utilisé dans l'exemple qui suit, comporte :
- un circuit en amont de la membrane (3), formant une boucle dans laquelle circule constamment le liquide de dispersion à filtrer, comprenant un réservoir (11) à la pression atmosphérique contenant la dispersion à filtrer (essais avec une suspension de kaolinite de 0,5 à 5 g/l selon les essais, de taille particulaire moyenne de 0,8 »m), une pompe débitmétrique, un débitmètre (12), un module de filtration tangentielle avec une membrane (3) de surface filtrante égale à 0,02 m², muni d'un manomètre (8) mesurant la pression Ph juste en sortie du module de filtration et éventuellement d'un manomètre (9) mesurant la pression en amont du module, une électro-vanne (2) à deux voies sur la boucle liquide en aval du module de filtration, enfin une électro-vanne (10) à trois voies permettant d'évacuer du circuit le rétentat quand nécessaire, le circuit se fermant par retour au réservoir (11) à la pression atmosphérique,
- en aval de la membrane, un conduit d'évacuation du filtrat équipé d'une électro-vanne (1), d'un débimètre (5), débouchant sur un réservoir (6) à la pression atmosphérique.
- un dispositif (7) de temporisation, de régulation et de contrôle qui permet d'asservir l'état des électro-vannes (1), (2) et (10) au débit de filtrat et à la pression hydrodynamique Ph en sortie du module de filtration, aux consignes de temporisation.

On a fait un essai pendant 8 heures avec une dispersion de kaolinite à 1 g/l.
Initialement, les vannes (1) et (2) sont ouvertes et la vanne (10) est fermée. On met en route la pompe débimétrique (4) et on règle son débit à 720 l/h. La vitesse tangentielle à l'entrée de la membrane est de 2,4 m/s, elle reste constante durant tout l'essai
On règle la vanne (2) jusqu'à ce que la pression hydrodynamique Ph atteigne la valeur de 0,14 MPa (pression relative), cette pression Ph, compte tenu du fait que l'autre côté de la membrane est sensiblement à la pression atmosphérique, est voisine de la pression transmembranaire à l'extrémité de la membrane. Le débit de filtrat est alors de 30 l/h.
Ce débit chute assez rapidement comme illustré à la figure 2 puisqu'au bout de 16 min, ce débit est de 6 l/h alors que la pression Ph est monté à 0,15 MPa.
Lorsque ce débit est atteint, la phase de décolmatage se déclenche :
a) en 1 seconde environ, la vanne (1) est fermée tandis que la vanne (2) est légèrement ouverte pour maintenir sensiblement constante la pression Ph. Au bout de 10 s,
b) on ouvre en 0,5 seconde la vanne (2). En même temps, on a ouvert la vanne (10) pour récupérer le rétentat riche en boues de décolmatage. Au bout de 10 secondes,
c) on ouvre la vanne (1), et on referme progressivement, en 20 secondes la vanne (2) jusqu'à ce qu'on obtienne la pression Ph initiale et on ferme la vanne (10). Puis le cycle recommence de manière régulière toutes les 16 minutes environ, comme représenté à la figure 2 pour les variations de débit de filtrat, et à la figure 3 pour les variations de la pression Ph et Pt, et cela pendant 8 heures sans qu'il y ait de dérive du procédé.
   Les divers essais réalisés à différentes concentration de kaolinite n'ont pas fait apparaître de différences entre les essais.

La demanderesse a ainsi constaté, sans en connaître les raisons précises, qu'il était possible de décolmater une membrane sans inverser la pression transmembranaire et donc sans faire refluer, vers l'amont de la membrane, du filtrat en aval de la membrane.
En outre, les équipements en contact avec le flux liquide (pompe, débitmètre, vannes) sont en pratique seulement ceux nécessaires à la filtration elle-même, de sorte que l'invention est avantageuse et économique sur le plan des investissements et des coûts de fonctionnement associés (entretien...) et s'applique plus particulièrement à la filtration de fluides corrosifs où le coût des équipements et de leur entretien est généralement très élevé.

### Description des figures

Les figures 1 à 3 sont relatives à l'exemple cité et illustrent typiquement l'invention sans cependant en constituer la seule modalité.

La figure 1 décrit l'installation utilisée pour les essais.

La figure 2 indique la variation de débit du filtrat au cours du temps et montre les cycles de filtration - décolmatage.

La figure 3 indique les variations de pression hydrodynamique Ph et transmembranaire Pt au cours d'un cycle complet de filtration - décolmatage.

## Revendications

1. Procédé de filtration tangentielle avec décolmatage, dans lequel un liquide à filtrer forme une boucle liquide et circule tangentiellement à une face d'une membrane (3) à l'aide d'une pompe (4) située en amont de la membrane qui crée une pression hydrodynamique Ph au niveau de la membrane, dans lequel un filtrat s'écoule sur l'autre face de la membrane par un conduit, muni d'une vanne (1) et d'un débitmètre (5), jusqu'à un bac à la pression atmosphérique Pa, dans lequel la filtration se produit grâce à une pression transmembranaire (Ph - Pa) positive, et selon lequel
- en phase de filtration, on ajuste la pression hydrodynamique Ph à l'aide d'une vanne réglable (2) située sur la boucle liquide en aval de la membrane,
- en phase de décolmatage,
a) dans une première étape, on ferme la vanne (1) de manière à annuler le flux et la pression transmembranaire, et simultanément, on ouvre légèrement la vanne (2) de manière à maintenir constante la pression hydrodynamique Ph,
b) puis, dans une deuxième étape, on ouvre brusquement la vanne (2), de manière à faire chuter brusquement la pression hydrodynamique Ph,
c) finalement, on ouvre la vanne (1) et progressivement on ferme la vanne (2) de manière à retrouver la pression hydrodynamique et la pression transmembranaire élevées initiales, au départ de la phase de filtration.

2. Procédé selon la revendication 1 dans lequel la pression hydrodynamique Ph a une valeur par rapport à la pression atmosphérique comprise entre 0,1 et 1 MPa en phase de filtration et dans l'étape a) de décolmatage.

3. Procédé selon une quelconque des revendications 1 et 2 dans lequel, dans l'étape b) de décolmatage, la pression hydrodynamique Ph chute à une pression sensiblement égale à la pression atmosphérique, c.-à-d. à une pression relative voisine de zéro.

4. Procédé selon une quelconque des revendications 1 à 3 dans lequel, à l'étape b) de décolmatage, la vitesse de chute de la pression hydrodynamique Ph est au moins égale à 0,05 MPa/s.

5. Procédé selon la revendication 4 dans lequel ladite vitesse de chute de la pression hydrodynamique PR est supérieure à 0,1 MPa/s.

6. Procédé selon une quelconque des revendications 1 à 5 dans lequel, à l'étape c) de décolmatage, la vitesse d'augmentation de la pression hydrodynamique Ph est inférieure à 0,1 MPa/s.

7. Procédé selon la revendication 6 dans lequel ladite vitesse d'augmentation de la pression hydrodynamique Ph est inférieure à 0,01 MPa/s.

8. Procédé selon une quelconque des revendications 1 à 7 dans lequel on utilise des électro-vannes et un dispositif (7) de commande automatique de ces vannes asservi au débit de filtrat qui déclenche l'étape de décolmatage lorsque le débit de filtrat atteint une valeur de consigne donnée.

9. Procédé selon une quelconque des revendications 1 à 8 dans lequel le liquide à filtrer est n'importe quel liquide chargé de particules solides.

10. Procédé selon une quelconque des revendications 1 à 9 dans lequel le liquide à filtrer est un liquide corrosif.

## Claims

1. A method of tangential filtration with filter cleaning, in which a liquid to be filtered forms a liquid loop and circulates tangentially to a surface of a membrane (3) by means of a pump (4) situated upstream of the membrane which creates a hydrodynamic pressure Ph at the level of the membrane, in which a filtrate flows onto the other surface of the membrane through a duct fitted with a valve (1) and a flow meter (5) as far as a tank at atmospheric pressure Pa, in which filtration takes place by virtue of a positive transmembranal pressure (Ph - Pa), and according to which
- during the filtration stage, the hydrodynamic pressure Ph is adjusted by means of a regulable valve (2) situated on the liquid loop downstream of the membrane,
- during the filter cleaning stage,
a) in a first phase, the valve (1) is closed in order to cancel the flow and the transmembranal pressure, and, at the same time, the valve (2) is opened slightly in order to keep the hydrodynamic pressure Ph constant,
b) in a second phase, the valve (2) is opened suddenly in order to cause an abrupt drop in hydrodynamic pressure Ph,
c) finally, the valve (1) is opened and the valve (2) is gradually closed in order to restore the initial high hydrodynamic pressure and transmembranal pressure at the start of the filtration phase.

2. A method according to Claim 1, wherein the hydrodynamic pressure Ph has a value in relation to atmospheric pressure of between 0.1 and 1 MPa in the filtration phase and in the filter cleaning phase a).

3. A method according to either of Claims 1 or 2, wherein in the filter cleaning stage b) the hydrodynamic pressure Ph drops to a pressure which is substantially equal to atmospheric pressure, that is to say a relative pressure which is close to zero.

4. A method according to any one of Claims 1 to 3, wherein, in the filter cleaning stage b) the rate of drop of the hydrodynamic pressure Ph, is at least equal to 0.05 MPa/s.

5. A method according to Claim 4, wherein said rate of drop in hydrodynamic pressure Ph is greater than 0.1 MPa/s.

6. A method according to any one of Claims 1 to 5, wherein in the filter cleaning stage c) the rate of increase of the hydrodynamic pressure Ph is less than 0.1 MPa/s.

7. A method according to Claim 6, wherein said rate of increase in hydrodynamic pressure Ph is less than 0.01 MPa/s.

8. A method according to any one of Claims 1 to 7, wherein electrically operated valves are used together with an automatic monitoring device (7) for these valves controlled in dependency on the rate of flow of the filtrate which triggers the filter cleaning phase when the rate of flow of filtrate reaches a given desired value.

9. A method according to any one of Claims 1 to 8, wherein the liquid to be filtered is any liquid charged with solid particles.

10. A method according to any one of Claims 1 to 9, wherein the liquid to be filtered is a corrosive liquid.

## Patentansprüche

1. Verfahren zur tangentialen Filtration mit Filtersäuberung, bei dem eine zu filternde Flüssigkeit einen Flüssigkeitskreislauf bildet und mittels einer Pumpe (4) tangential an einer Fläche einer Membran (3) vorbeiströmt, wobei die Pumpe (4) stromaufwärts der Membran angebracht ist und einen hydrodynamischen Druck Ph an der Membran erzeugt, und wobei auf der anderen Seite der Membran ein Filtrat durch eine mit einem Ventil (1) und einem Flußmeßgerät (5) versehene Leitung bis zu einem Behälter auf atmosphärischem Druck Pa fließt, und wobei sich die Filtration aufgrund eines über die Membran hinweg herrschenden positiven Drucks (Ph - Pa) vollzieht, und bei dem
- in der Filtrationsphase der hydrodynamische Druck Ph mittels eines einstellbaren Ventils (2), das im Flüssigkeitskreislauf stromabwärts der Membran angebracht ist, eingestellt wird,
- in der Filterreinigungsphase
a) in einem ersten Schritt das Ventil (1) derart geschlossen wird, daß der Fluß und der über die Membran hinweg herrschende Druck aufhören, und gleichzeitig das Ventil (2) derart leicht geöffnet wird, daß der hydrodynamische Druck Ph konstant gehalten wird,
b) dann in einem zweiten Schritt das Ventil (2) plötzlich geöffnet wird, so daß der hydrodynamische Druck Ph plötzlich abnimmt,
c) schließlich das Ventil (1) geöffnet und das Ventil (2) allmählich geschlossen wird, so daß der anfänglich in der Phase der Filtration höhere hydrodynamische Druck und der über die Membran hinweg herrschende Druck wieder eingestellt wird.

2. Verfahren nach Anspruch 1, bei dem der hydrodynamische Druck Ph in der Filtrationsphase und in Schritt a) der Filterreinigung in bezug auf den atmosphärischen Druck einen Wert zwischen 0,1 und 1 MPa hat.

3. Verfahren nach Anspruch 1 oder 2, bei dem im Schritt b) der Filterreinigung der hydrodynamische Druck Ph auf einen Druck näherungsweise gleich dem atmosphärischen Druck abfällt, also auf einen relativen Druck näherungsweise Null.

4. Verfahren nach einem der Ansprüche 1 bis 3, bei dem im Schritt b) der Filterreinigung die Geschwindigkeit des Abfalls des hydrodynamischen Drucks Ph mindestens gleich 0,05 MPa/s ist.

5. Verfahren nach Anspruch 4, bei dem die Geschwindigkeit des Abfalls des hydrodynamischen Drucks Ph über 0,1 MPa/s liegt.

6. Verfahren nach einem der Ansprüche 1 bis 5, bei dem im Schritt c) der Filterreinigung die Geschwindigkeit der Zunahme des hydrodynamischen Drucks Ph kleiner als 0,1 Mpa/s ist.

7. Verfahren nach Anspruch 6, bei dem die Geschwindigkeit der Zunahme des hydrodynamischen Drucks Ph kleiner als 0,01 MPa/s ist.

8. Verfahren nach einem der Ansprüche 1 bis 7, bei dem man Elektroventile und eine Steuerungsvorrichtung (7) zur automatischen Steuerung dieser Ventile nach Maßgabe des Filtratausstoßes verwendet, wobei der Filterreinigungsschritt begonnen wird, wenn der Filtratausstoß einen gegebenen Setzwert annimmt.

9. Verfahren nach einem der Ansprüche 1 bis 8, bei dem die zu filternde Flüssigkeit eine beliebige feste Partikel enthaltende Flüssigkeit ist.

10. Verfahren nach einem der Ansprüch 1 bis 9, bei dem die zu filternde Flüssigkeit eine korrosive Flüssigkeit ist.
